# FASCICULE DE BREVET EUROPEEN

(11) **EP 2 652 352 B1**
(45) Date de publication et mention de la délivrance du brevet: **06.04.2016**
(21) Numéro de dépôt: 11793685.6
(22) Date de dépôt: 19.09.2011
(51) Int. Cl.: F16D 65/14, F16D 55/226

(54) **FREIN À DISQUE MUNI D'UNE CARTOUCHE DE CONVERSION DE MOUVEMENT**
SCHEIBENBREMSE MIT EINER BEWEGUNGSUMWANDLUNGSPATRONE
DISC BRAKE PROVIDED WITH A MOVEMENT-CONVERTING CARTRIDGE

(30) Priorité: 22.10.2010 FR 1004172
(43) Date de publication de la demande: 23.10.2013
(73) Titulaire: Chassis Brakes International B.V., 1011 VM Amsterdam (NL)
(72) Inventeur: VINCK, Jan, F-49250 Beaufort En Vallee (FR); CHAIGNEAU, Fabien, F-49190 Rochefort sur Loire (FR); GOSSE, William, F-49250 Fontaine Guerin (FR)
(74) Mandataire: Hurwic, Aleksander Wiktor
(86) Numéro de dépôt international: PCT/EP2011/066219
(87) Numéro de publication internationale: WO 2012/052239

(56) Documents cités:
- EP-A1- 1 936 227
- WO-A1-01/34991
- US-A1- 2005 034 935

## Description

### Domaine de l'invention

La présente invention concerne une frein à disque comprenant un étrier flottant chevauchant le disque de frein, portant un patin fixe et formant un cylindre logeant un piston portant un patin mobile pour serrer le disque de frein,
- le piston étant commandé par le circuit hydraulique et par le système de freins de stationnement par l'intermédiaire d'une cartouche de conversion de mouvement transformant le mouvement de pivotement du levier du frein à main, porté par l'étrier en un mouvement de translation pour pousser le piston de frein,
- le cylindre ayant une partie avant logeant le piston de frein et une partie arrière formant un logement recevant la cartouche de conversion à forme de révolution venant contre le patin mobile et le fond du cylindre, la cartouche traversant de manière étanche un orifice axial du fond du cylindre pour relier son arbre de commande au levier du frein de stationnement.

### Etat de la technique

On connaît déjà un tel frein à disque décrit dans le document EP 1 936 227. Ce document concerne notamment un procédé d'assemblage d'un frein à disque et en particulier l'assemblage de la cartouche convertissant le mouvement de rotation du levier du frein à main en un mouvement de translation du piston de frein pour mettre en oeuvre le frein de stationnement ou le libérer.

Dans ce montage la partie arrière de la cartouche comporte un pion venant dans un trou du fond du logement recevant la cartouche dans le cylindre de l'étrier de frein. Cette réalisation est relativement compliquée tant à fabriquer qu'à installer et le pion subit des efforts de rotation importants lors de l'actionnement du frein à main.

### But de l'invention

La présente invention a pour but de simplifier la fabrication de l'étrier de frein en réduisant le nombre de pièces constituant la cartouche de conversion de mouvement et la fabrication de l'étrier.

### Exposé et avantages de l'invention

A cet effet l'invention concerne un frein à disque du type défini ci-dessus, caractérisé en ce que,
- d'un palier en forme de manchon muni d'une collerette appuyée autour d'un orifice de passage du fond du logement traversé partiellement par le manchon, et
- d'un arbre de commande relié au levier pivotant et portant un premier plateau,

A₂) une partie avant appuyée contre le piston de frein,
   - mobile en translation par rapport au cylindre mais bloquée en rotation,
   - la partie avant se composant :
      * d'un piston muni d'un deuxième plateau destiné à coopérer avec le premier plateau de l'arbre de commande avec interposition de billes mobiles dans des rampes dans les deux plateaux pour transformer le mouvement de rotation relatif entre les deux plateaux en un mouvement de translation du piston, et
      * d'une cage de retenue du piston de conversion dans le cylindre par l'intermédiaire d'un clip ainsi qu'un ressort de rappel interposé entre la cage et le piston agissant contre le mouvement de translation généré par les plateaux et les billes,
B) le cylindre comporte au niveau de sa partie arrière formant le logement recevant la cartouche de conversion au moins une rainure longitudinale et le piston de conversion comporte à sa périphérie, une nervure longitudinale de section complémentaire à celle de la rainure longitudinale, pour coopérer avec celle-ci et bloquer la rotation de la partie avant de la cartouche en la laissant libre en translation.

Ainsi, le blocage en rotation (ou effet antirotation) du piston du convertisseur, c'est-à-dire de l'écrou mobile du convertisseur est réalisé directement sur l'étrier sans nécessiter de pièces intermédiaires puisque le blocage en rotation se fait par la ou les nervures longitudinales portées par la partie avant de la cartouche et la ou les rainures longitudinales homologues réalisées dans le logement de la cartouche dans l'étrier.

On supprime ainsi de manière très avantageuse le boîtier arrière de la cartouche et son pion antirotation destiné à se placer dans un trou au fond de l'étrier.

Ainsi, ce boîtier ou cage de la partie arrière est remplacé par un simple palier arrière à section en forme de L. La suppression de la cage de la partie arrière améliore la purgeabilité du circuit de frein puisqu'il n'y a aucune pièce fermée dans le convertisseur de mouvement selon l'invention. Cela simplifie la réalisation de la cage, et raccourcit la longueur du cylindre ou fût de l'étrier recevant la cartouche.

L'invention simplifie également l'assemblage de la cartouche qui se fait directement en bord de chaîne d'assemblage du frein et on supprime ainsi une machine dédiée à la préparation de la cartouche assemblée. Il n'y a plus de clipage de la cage sur le boîtier arrière ce qui se traduit par la suppression du risque de formation de copeaux.

Enfin, cette forme de réalisation peut s'appliquer à des pistons de plus petit diamètre que celui des pistons utilisés actuellement avec des efforts de piston identiques.

Suivant une autre caractéristique avantageuse, le logement de la cartouche dans l'étrier comporte trois rainures longitudinales et le piston est muni de trois nervures longitudinales (branches), les rainures étant réparties de manière équiangulaire et les nervures étant dans des positions homologues à celles des rainures.

Ces trois rainures longitudinales et les trois nervures longitudinales du piston de convertisseur, permettent un excellent blocage en rotation du piston de convertisseur tout en évitant les problèmes liés au couple important qui peut être appliqué au piston de conversion par la liaison constituée par la transmission à billes entre les plateaux. Cet excellent blocage en rotation est également favorable au rappel du piston de conversion lorsque le frein de stationnement est libéré.

Suivant une autre caractéristique avantageuse au moins une rainure du logement a une section en arc de cercle et notamment en demi-cercle et la nervure portée par le piston du convertisseur a une section en forme d'arc de cercle égale à celle de la rainure. Cette forme de rainures et de nervures est très facile à réaliser en particulier l'usinage de chaque rainure.

Suivant une autre caractéristique avantageuse, la nervure longitudinale est constituée par une branche dépassant le plateau vers l'arrière et chevauchant au moins une fraction de longueur axiale de la partie arrière.

La longueur de la nervure longitudinale constituée ainsi par une branche et surtout la longueur des nervures longitudinales, de préférence au nombre de trois, du piston de conversion, permettent un excellent guidage et une excellente tenue du piston dans l'étrier. Les branches dépassant vers l'arrière permettent de réduire la longueur axiale de la cartouche de conversion sans que cela ne soit au détriment du guidage d'autant plus que les branches sont à la fois maintenues par le palier arrière et le plateau de l'arbre de commande de la cartouche, qui se logent dans l'espace libre entouré par les branches. Dans ces conditions, même sous un effort qui pourrait être violent, les branches ne peuvent sortir de leurs rainures puisqu'elles y sont maintenues, en quelque sorte bloquées, par la présence de la partie arrière de la cartouche.

Suivant une autre caractéristique avantageuse, le logement de la cartouche comporte un épaulement recevant en appui la collerette de la cage et une gorge périphérique pour recevoir le clip.

Suivant une autre caractéristique avantageuse, la cage est une pièce en acier élastique de forme globale tronconique ayant un fond en forme de couronne portant des lames reliées à une collerette et des lames intermédiaires, d'extrémité libre, recevant le clip.

Cette cage et la coopération de la cage d'une part avec l'épaulement et d'autre part avec la gorge périphérique recevant le clip, permettent un excellent accrochage solidaire de la cartouche de conversion dans son logement du fût de l'étrier. Cet accrochage est solidaire et ne peut s'ouvrir de lui-même. Il nécessite un outil particulier tel qu'un manchon, prenant appui sur la forme tronconique de la cage pour resserrer progressivement les lamelles de la cage et permettre ainsi, par le mouvement rentrant, d'escamoter la collerette et de la dégager de sa gorge. La mise en place se fait dans les mêmes conditions, en procédant dans l'ordre inverse.

Globalement, le frein à disque équipé d'une telle cartouche de conversion de mouvement est simple à réaliser et à assembler grâce au nombre réduit de pièces. Il permet un excellent fonctionnement du frein et en garantit la fiabilité.

### Dessins

La présente invention sera décrite ci-après de manière plus détaillée à l'aide des dessins annexés dans lesquels:
- la figure 1 est une vue en coupe schématique d'un étrier de frein placé sur le disque de frein, montrant le piston de frein sans la cartouche de conversion,
- la figure 2 montre dans ses parties 2A et 2B, deux vues en perspective suivant des directions opposées de la cartouche de conversion,
- la figure 3 est une vue en coupe axiale du cylindre de l'étrier de frein et de la mise en place de la cartouche de conversion cette dernière n'étant pas coupée,
- la figure 4 est une vue en perspective du piston de la cartouche de conversion,
- la figure 5 est une vue éclatée des principaux composants de la cartouche de conversion.

### Description d'un mode de réalisation de l'invention

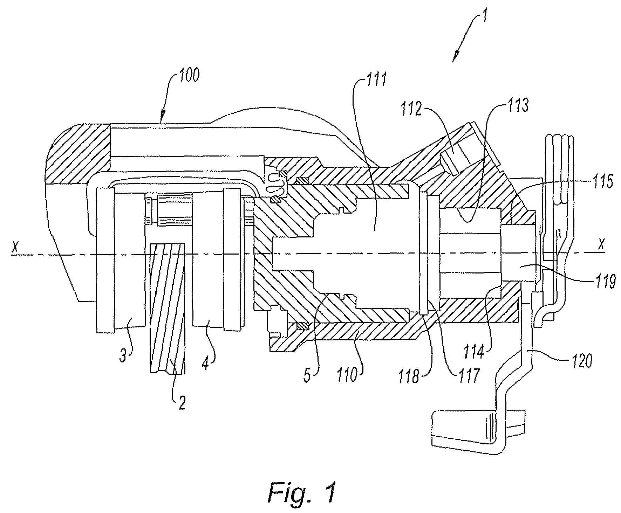

Par convention, pour simplifier la description du frein à disque selon l'invention, on utilisera l'orientation donnée par l'axe xx de la figure 1 dont le côté gauche est dirigé vers ce qui est considéré comme l'avant et le côté droit, dirigé vers ce qui est considéré comme l'arrière: ainsi l'avant du piston de frein est tourné vers son patin de frein et l'arrière du piston de frein, tourné vers son logement dans l'étrier. De même, le convertisseur de mouvement aura une partie avant du côté du piston de frein et une partie arrière du côté du fond de son logement dans l'étrier.

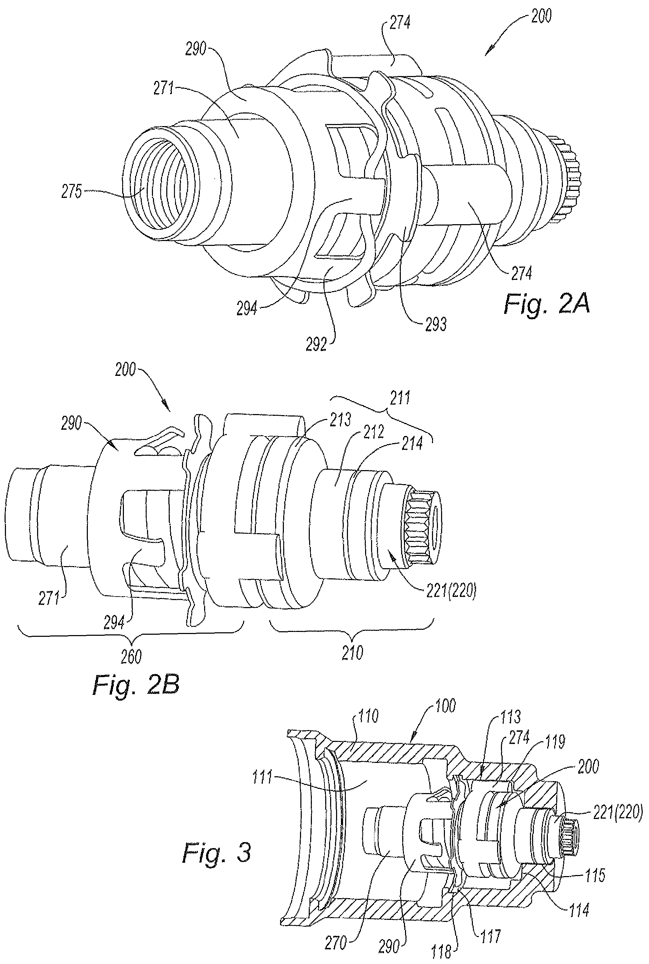

Selon les figures 1 et 2A, 2B, l'invention concerne un frein à disque 1 associé au circuit de freinage et à la commande du frein de stationnement. L'étrier flottant 100 chevauche le disque de frein 2 et porte un patin fixe 3 et un patin mobile 4. Ce dernier est actionné par un piston de frein 5 logé dans le cylindre 110 (ou fût) de l'étrier 100. Le cylindre 110 délimite une chambre étanche 111 reliée au circuit de frein par un branchement 112 non détaillé. Cette chambre étanche 111 loge également une cartouche de conversion de mouvement 200 (figures 2A,B) appliquée contre le fond 114 du logement 113 du cylindre de l'étrier. Le logement 113 prolonge le cylindre 110 du piston de frein. Le fond 114 est muni d'un orifice 115 que traverse de manière étanche l'extrémité de la cartouche 200 (figure 3) pour la liaison d'entraînement avec le levier pivotant 120 relié à la commande du frein à main, dont le mouvement de rotation (pivotement) sera transformé en un mouvement de translation appliqué au piston de frein 5.

La cartouche de conversion de mouvement 200 représentée aux figures 2A-5 se compose d'une partie arrière 210 et d'une partie avant 260.

La partie arrière 210 est formée elle-même d'un palier 211 à section en forme de T comprenant un manchon 212 muni d'une collerette 213. Le manchon 211 se place dans l'orifice 115 du fond 114 de l'étrier 100 et sa collerette 213 s'appuie sur la surface du fond 114 entourant l'orifice 115. Ce palier 211 muni d'un joint torique 214 pour assurer l'étanchéité par rapport à l'orifice 115, reçoit un arbre de commande 220 constitué par une partie cylindrique 221 terminée à l'avant par un premier plateau 222. La partie cylindrique 221 traverse le manchon 212 du palier 211 pour venir en saillie à l'arrière de l'étrier et recevoir le levier d'actionnement 120 du frein à main. Le plateau 222 s'appuie contre la collerette 213 du palier 211. La face avant du plateau 222 est munie de gorges de profondeur variable pour coopérer avec des billes 230 portées par une cage 231, ces billes coopérant elles-mêmes dans les mêmes conditions avec le piston de conversion 270 mobile en translation.

La partie avant 260 du convertisseur 200 se compose du piston de conversion 270 constitué par un manchon 271 portant à l'arrière un second plateau 272 muni de rainures de profondeur variable 273, complémentaires dans leur disposition et leur forme à celles des rainures de profondeur variable (non visibles) du premier plateau 222 de l'arbre de commande 220. Les billes 230, par exemple au nombre de trois de la cage 231 sont destinées à rouler dans les rainures homologues du plateau 222 de l'arbre de commande 220 et de celui 272 du piston 270 pour transformer le mouvement de rotation du plateau 222 de l'arbre de commande 220 en un mouvement de translation du piston de conversion 270 par le jeu des rampes complémentaires formées par les rainures comme cela est connu en soi. La partie avant 260 comprend également un ressort de compression 280 emmanché sur le manchon cylindrique 271 du piston de conversion et s'appuyant d'une part contre le plateau 272 du piston 270 et d'autre part contre le fond 291 d'une cage 290 également installée sur le manchon 271 du piston 270.

La cage 290 est une pièce en acier élastique de forme globale tronconique comprenant une couronne constituant le fond 291 côté avant, portant des lames 292 reliées deux à deux aux deux parties d'une collerette fendue 293 tournée vers l'extérieur et des lames intermédiaires 294, libres. Un clip 201 est installé dans la cage 290 autour et entre les lames 292, 294, pour retenir le convertisseur 200 dans son logement 113 de l'étrier 100. Pour la mise en place d'une manière connue en soi, la collerette fendue 293 et le clip 201 sont comprimés à l'aide d'un outil en forme de manchon. Le clip 201 retient la cage 290 en coopérant avec une gorge périphérique 118 et la collerette fendue 293 prend place dans le logement 113 contre un épaulement 117 dans l'étrier 100 comme cela est réalisé par le procédé de montage décrit au document EP 1 936 227 cité ici à titre de référence. La cartouche 200 est ainsi bloquée dans son logement 113 dans un sens par son appui par l'intermédiaire de la collerette fendue 293 contre l'épaulement 117 et dans le sens opposé par le clip 201 accroché dans la gorge périphérique 118, seuls restant libres en mouvement, la tige de commande 220 et le piston 270.

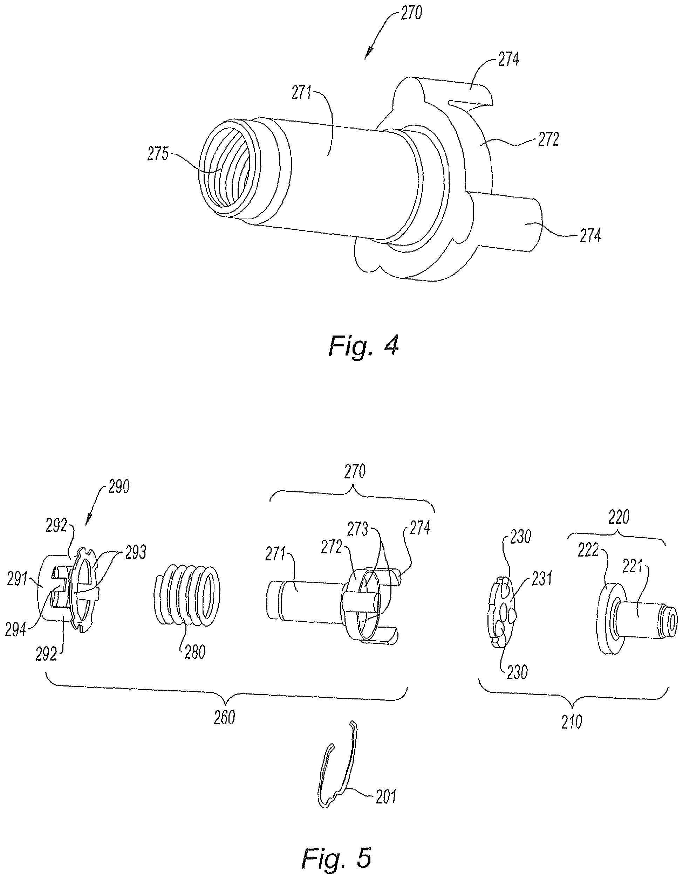

Le piston 270 (figures 4, 5) comporte une ou plusieurs nervures longitudinales constituées dans cet exemple, par des branches 274 qui prolongent le plateau 272 vers l'arrière. Ces branches 274 à section de forme semi-circulaire sont logées en coulissement dans des rainures 119 de section correspondante réalisées dans la paroi du logement 113 de l'étrier 100 (figure 3) dans des positions homologues à celles des branches. Les branches 274 sont de préférence au nombre de trois réparties de manière équiangulaire autour de l'axe xx du logement 113. Le piston 270 est ainsi bloqué en rotation dans le logement 113 tout en restant libre en translation. Les branches 274 chevauchent la partie arrière 210 au niveau du bord du plateau 222 et de la collerette 213 du palier 211. Le disque formant la cage 231 tenant les billes 230 est également maintenu par les branches ce qui est important pour la réalisation du sous-ensemble constitué par la cartouche de conversion et cela facilite considérablement sa mise en place dans le logement 113.

Après installation de la cartouche, l'arbre de commande 220 et son plateau 222 sont en revanche montés libres en rotation de sorte que le mouvement de rotation de l'arbre de commande 220 se traduit par une rotation relative de son plateau 222 par rapport au plateau 272 intégré au piston 270 ce qui produit le mouvement de translation du piston 270, transmis au piston de frein 5..

Le piston de conversion 270 s'appuie contre l'arrière du piston de frein 5 par un compensateur d'usure non représenté, logé dans le piston 270 formant un écrou d'une liaison vis-écrou. La compensation de l'usure des patins de frein se fait de manière connue de l'homme du métier lors du mouvement de retrait de l'écrou, à la libération du frein de stationnement.

La cartouche 200 est composée d'un nombre réduit de pièces et constitue une unité assemblée, prête à être installée dans le fût de l'étrier de frein 100. Cette mise en place ne gêne ni ne complique l'installation ultérieure du piston de frein et ne perturbe pas ensuite la purge du circuit de frein.

La présente invention concerne le domaine des systèmes de freins à disque de véhicules automobiles.

### NOMENCLATURE DES ELEMENTS PRINCIPAUX

- 1: frein à disque
- 2: disque de frein
- 3: patin fixe
- 4: patin mobile
- 5: piston de frein
- 17: gorge périphérique du logement

- 100: étrier
- 110: cylindre
- 111: chambre de piston
- 112: branchement
- 113: logement
- 114: fond du logement
- 115: orifice du fond du logement
- 117: épaulement
- 118: gorge périphérique
- 119: rainure
- 120: levier

- 200: cartouche de conversion de mouvement
- 201: clip
- 210: partie arrière de la cartouche
- 211: palier à section en forme de T
- 212: manchon
- 213: collerette
- 214: joint torique
- 220: arbre de commande
- 221: partie cylindrique
- 222: premier plateau
- 230: billes
- 231: cage recevant les billes
- 260: partie avant de la cartouche
- 270: piston de conversion
- 271: manchon
- 272: deuxième plateau
- 273: rainures de profondeur variable
- 274: nervure/branche longitudinale
- 275: écrou
- 280: ressort de compression
- 290: cage
- 291: fond
- 292: lame
- 293: collerette fendue
- 294: lame intermédiaire

## Revendications

1. Frein à disque comprenant un étrier flottant (100) chevauchant le disque de frein (2) portant un patin fixe (3) et formant un cylindre (110) logeant un piston 55) portant un patin mobile pour serrer le disque de frein,
• le piston (5) étant commandé par le circuit hydraulique et par le système de freins de stationnement par l'intermédiaire d'une cartouche de conversion de mouvement (200) transformant le mouvement de pivotement du levier du frein à main, porté par l'étrier (100) en un mouvement de translation pour pousser le piston de frein (5),
• le cylindre (110) ayant une partie avant logeant le piston de frein (5) et une partie arrière formant un logement (113) recevant la cartouche de conversion (200) à forme de révolution venant contre le patin mobile et le fond du cylindre, la cartouche (200) traversant de manière étanche un orifice axial du fond (114) du cylindre pour relier son arbre de commande au levier (120) du frein de stationnement,
**caractérisé en ce que**
A) la cartouche de conversion (200) comprend:
A₁) une partie arrière (210) appuyée contre le fond (114) du logement (113) du cylindre et se composant :
- d'un palier (211) en forme de manchon (212) muni d'une collerette (213) appuyée autour d'un orifice de passage (115) du fond du logement (113) traversé partiellement par le manchon (212), et
- d'un arbre de commande (220) relié au levier pivotant (120) et portant un premier plateau (222),
A₂) une partie avant (260) appuyée contre le piston de frein (5),
- mobile en translation par rapport au cylindre (110) mais bloquée en rotation,
- la partie avant (260) se composant :
* d'un piston (270) muni d'un deuxième plateau (272) destiné à coopérer avec le premier plateau (222) de l'arbre de commande (220) avec interposition de billes (230) mobiles dans des rampes (273) dans les deux plateaux (222, 272) pour transformer le mouvement de rotation relatif entre les deux plateaux (222, 272) en un mouvement de translation du piston (270), et
* d'une cage (290) de retenue du piston de conversion (200) dans le cylindre (110) par l'intermédiaire d'un clip (201) ainsi qu'un ressort de rappel (280) interposé entre la cage et le piston agissant contre le mouvement de translation générépar les plateaux (222, 272) et les billes (230),
B) le cylindre (110) comporte au niveau de sa partie arrière formant le logement (113) recevant la cartouche de conversion (200) au moins une rainure longitudinale (119) et le piston de conversion (270) comporte à sa périphérie une nervure longitudinale (274) de section complémentaire à celle de la rainure longitudinale (119), pour coopérer avec celle-ci et bloquer la rotation de la partie avant (260) de la cartouche (200) en la laissant libre en translation.

2. Frein à disque selon la revendication 1,
**caractérisé en ce que**
le logement (113) de la cartouche (200) dans l'étrier (100) comporte trois rainures longitudinales (118) et le piston (270) est muni de trois nervures longitudinales (274), les rainures (118) étant réparties de manière équiangulaire et les nervures (274) étant dans des positions homologues à celles des rainures (118).

3. Frein à disque selon la revendication 1,
**caractérisé en ce qu'**
la rainure (118) du logement (113) a une section en arc de cercle et notamment en demi-cercle et la nervure (274) portée par le piston (270) du convertisseur a une section en forme d'arc de cercle égale à celle de la rainure (118).

4. Frein à disque selon la revendication 1,
**caractérisé en ce que**
la nervure longitudinale (274) est constituée par une branche dépassant le plateau (272) vers l'arrière et chevauchant au moins une fraction de longueur axiale de la partie arrière (210).

5. Frein à disque selon la revendication 1,
**caractérisé en ce que**
le logement (113) de la cartouche (200) comporte un épaulement (117) pour recevoir en appui la collerette (293) de la cage (290) et une gorge périphérique (118) pour recevoir le clip (201).

6. Frein à disque selon la revendication 1,
**caractérisé en ce que**
la cage (290) est une pièce en acier élastique de forme globale tronconique ayant un fond (291) en forme de couronne portant des lames (292) reliées à une collerette (293) et des lames intermédiaires (294), d'extrémité libre, recevant le clip (201).

## Patentansprüche

1. Scheibenbremse, einen Schwimmsattel (100) umfassend, der die Bremsscheibe (2) überfasst, einen festen Bremsbelagträger (3) tragend und einen Zylinder (110) ausbildend, in dem ein Kolben 55) untergebracht ist, einen beweglichen Bremsbelagträger tragend, um die Bremsscheibe festzuklemmen,
• wobei der Kolben (5) durch den Hydraulikkreislauf und durch das Parkbremssystem mittels einer Bewegungsumwandlungskartusche (200) gesteuert wird, welche die Schwenkbewegung des Handbremshebels, der von dem Sattel (100) getragen wird, in eine Translationsbewegung umwandelt, um den Bremskolben (5) zu drücken,
• wobei der Zylinder (110) einen vorderen Teil, in dem der Bremskolben (5) untergebracht ist, und einen hinteren Teil aufweist, der eine Aufnahme (113) ausbildet, welche die Umwandlungskartusche (200) in Umdrehungsform aufnimmt, die gegen den beweglichen Bremsbelagträger und den Boden des Zylinders anliegt,
• wobei die Kartusche (200) eine axiale Öffnung des Bodens (114) des Zylinders auf abdichtende Weise zur Verbindung ihrer Steuerwelle mit dem Hebel (120) der Parkbremse durchquert,
**dadurch gekennzeichnet, dass**
A) die Umwandlungskartusche (200) umfasst:
A₁) einen hinteren Teil (210), der sich gegen den Boden (114) der Aufnahme (113) des Zylinders abstützt und sich zusammensetzt aus:
- einem Lager (211) in Form einer Buchse (212), die mit einem Flansch (213) versehen ist, der sich um eine Durchgangsöffnung (115) am Boden der Aufnahme (113) abstützt, durch welche die Buchse (212) teilweise hindurchgeht, und
- einer Steuerwelle (220), die mit dem Schwenkhebel (120) verbunden ist und eine erste Scheibe (222) trägt,
A₂) einen vorderen Teil (260), der sich gegen den Bremskolben (5)
- translationsbeweglich im Verhältnis zu dem Zylinder (110) abstützt, aber bei der Drehung blockiert ist,
- wobei der vordere Teil (260) sich zusammensetzt aus:
* einem Kolben (270), der mit einer zweiten Scheibe (272) versehen ist, die dazu vorgesehen ist, mit der ersten Scheibe (222) der Steuerwelle (220) mit dazwischenliegenden beweglichen Kugeln (230) in den Schrägen (273) in den beiden Scheiben (222, 272) zusammenzuwirken, um die relative Drehbewegung zwischen den beiden Scheiben (222, 272) in eine Translationsbewegung des Kolbens (270) umzuwandeln, und
* einem Rückhaltekäfig (290) des Umwandlungskolbens (200) in dem Zylinder (110) mittels eines Clips (201) sowie einer Rückstellfeder (280), die zwischen dem Käfig und dem Kolben zwischengelegt ist, auf die Translationsbewegung, die durch die Scheiben (222, 272) und die Kugeln (230) erzeugt wird, einwirkend,
B) der Zylinder (110) in Höhe seines hinteren Teils, welcher die Aufnahme (113) ausbildet, welche die Umwandlungskartusche (200) aufnimmt, mindestens eine längliche Nut (119) umfasst, und der Umwandlungskolben (270) an seinem Umfang eine längliche Rippe (274) mit einem Querschnitt komplementär zu demjenigen der länglichen Nut (119) umfasst, um mit dieser zusammenzuwirken und um die Drehung des vorderen Teils (260) der Kartusche (200) zu blockieren, wobei sie frei zur Translationsbewegung bleibt.

2. Scheibenbremse nach Anspruch 1, **dadurch gekennzeichnet, dass** die Aufnahme (113) der Kartusche (200) in dem Sattel (100) drei längliche Nuten (118) umfasst und der Kolben (270) mit drei länglichen Rippen (274) versehen ist, wobei die Nuten (118) in gleichmäßigen Winkelabständen verteilt sind, und sich die Rippen (274) in ähnlichen Stellungen wie die der Nuten (118) befinden.

3. Scheibenbremse nach Anspruch 1, **dadurch gekennzeichnet, dass** die Nut (118) der Aufnahme (113) einen kreisbogenförmigen und insbesondere einen halbkreisförmigen Querschnitt aufweist und die Rippe (274), die der Kolben (270) des Umrichters trägt, einen kreisbogenförmigen Querschnitt aufweist, der gleich dem der Nut (118) ist.

4. Scheibenbremse nach Anspruch 1, **dadurch gekennzeichnet, dass** die längliche Rippe (274) aus einem Schenkel besteht, der über die Scheibe (272) nach hinten hinaussteht und mindestens einen Bruchteil der axialen Länge des hinteren Teils (210) überlappt.

5. Scheibenbremse nach Anspruch 1, **dadurch gekennzeichnet, dass** die Aufnahme (113) der Kartusche (200) eine Schulter (117), um den Flansch (293) des Käfigs (290) anschlagend aufzunehmen, und eine Umfangsrille (118) umfasst, um den Clips (201) aufzunehmen.

6. Scheibenbremse nach Anspruch 1, **dadurch gekennzeichnet, dass** der Käfig (290) aus einem elastischen Stahlteil allgemein kegelstumpfförmiger Gestalt besteht, mit einem Boden (291) in Form einer Krone, der Streifen (292), die mit einem Flansch (293) verbunden sind, und Zwischenstreifen (294) trägt, mit einem freien Ende, das den Clips (201) aufnimmt.

## Claims

1. Disc brake comprising a floating stirrup (100) straddling the brake disc (2) bearing a fixed shoe (3) and forming a cylinder (110) housing a piston 55) bearing a mobile shoe for clamping the brake disc,
• the piston (5) being controlled by the hydraulic circuit and by the parking brake system via a motion conversion cartridge (200) transforming the pivoting motion of the hand brake lever, borne by the stirrup (10), into a translational motion to push the brake piston (5),
• the cylinder (110) having a front part housing the brake piston (5) and a rear part forming a housing (113) receiving the conversion cartridge (200), with a shape of revolution, coming against the mobile shoe and the bottom of the cylinder, the cartridge (200) passing, in a seal-tight manner, through an axial orifice of the bottom (114) of the cylinder to link its control shaft to the lever (120) of the parking brake,
**characterized in that**
A) the conversion cartridge (200) comprises:
A₁) a rear part (210) pressed against the bottom (114) of the housing (113) of the cylinder and consisting of:
- a bearing (211) in the form of a sleeve (212) provided with a flange (213) pressed around a through-orifice (115) of the bottom of the housing (113) partially passed through by the sleeve (212), and
- a control shaft (220) linked to the pivoting lever (120) and bearing a first plate (222), A₂) a front part (260) pressed against the brake piston (5),
- mobile in translation relative to the cylinder (110) but blocked in rotation,
- the front part (260) consisting of:
* a piston (270) provided with a second plate (272) intended to cooperate with the first plate (222) of the control shaft (220) with the interposition of mobile balls (230) in ramps (273) in the two plates (222, 272) to transform the relative rotational motion between the two plates (222, 272) into a translational motion of the piston (270), and
* a cage (290) retaining the conversion piston (200) in the cylinder (110) via a clip (210) and a return spring (280) interposed between the cage and the piston acting against the translational motion generated by the plates (222, 272) and the balls (230),
B) the cylinder (110) comprises, in its rear part forming the housing (113) receiving the conversion cartridge (200), at least one longitudinal groove (119) and the conversion piston (270) comprises, at its periphery, a longitudinal rib (274) of a section complementing that of the longitudinal groove (119), to cooperate therewith and block the rotation of the front part (260) of the cartridge (200) while leaving it free in translation.

2. Disc brake according to Claim 1,
**characterized in that**
the housing (113) of the cartridge (200) in the stirrup (100) comprises three longitudinal grooves (118) and the piston (270) is provided with three longitudinal ribs (274), the grooves (118) being distributed equiangularly and the ribs (274) being in positions matching those of the grooves (118).

3. Disc brake according to Claim 1,
**characterized in that**
the groove (118) of the housing (113) has an arc-of-circle section, and in particular a half-circle section, and the rib (274) borne by the piston (270) of the converter has a section in the form of an arc of circle equal to that of the groove (118).

4. Disc brake according to Claim 1,
**characterized in that**
the longitudinal rib (274) consists of a branch extending beyond the plate (272) towards the rear and straddling at least a fraction of axial length of the rear part (210).

5. Disc brake according to Claim 1,
**characterized in that**
the housing (113) of the cartridge (200) comprises a shoulder (117) to receive, bearing on it, the flange (293) of the cage (290) and a peripheral groove (118) to receive the clip (201).

6. Disc brake according to Claim 1,
**characterized in that**
the cage (290) is a part made of elastic steel of overall tapered form having a bottom (291) in the form of a ring bearing blades (292) linked to a flange (293) and intermediate blades (294), with free ends, receiving the clip (201).
